# EUROPEAN PATENT APPLICATION

(11) **EP 3 428 751 A1**
(43) Date of publication of application: **16.01.2019**
(21) Application number: 17181038.5
(22) Date of filing: 12.07.2017
(51) Int. Cl.: G05B 19/21, G01B 11/00, G05B 19/25

(54) **MEASURING POSITION OF MOTION STAGE**

(71) Applicant: Koninklijke Philips N.V., 5656 AE Eindhoven (NL)
(72) Inventor: van der Laan, Ewout Peter, 5656 AE Eindhoven (NL); Bruijnen, Dennis Johannes Hubertinus, 5656 AE Eindhoven (NL)
(74) Representative: Steenbeek, Leonardus Johannes

(57) **Abstract**

A system and method are provided for measuring a position of a motion stage. The motion stage 40 has a surface on which a two-dimensional visual pattern is provided. A plurality of image sensors 1, 2 are directed at the operating area of the motion stage and positioned at known relative positions to each other. Each of the plurality of image sensors comprises a one-dimensional sensor array. For example, the image sensors may be Contact Image Sensors (CIS). Using the plurality of image sensors, sensor data 30, 31 representing at least two one-dimensional intersections of the visual pattern is obtained. The position of the motion stage is then determined by matching the sensor data with the visual pattern on the basis of the known relative positions of the at least two image sensors.

## Description

### FIELD OF THE INVENTION

The invention relates to a system and a computer-implemented method for measuring a position of a motion stage. The invention further relates to a motion stage for use with the system and method, and to a computer readable medium comprising instructions for causing a processor system to perform the method.

### BACKGROUND OF THE INVENTION

Motion stages are platforms that are movable in an operating area along at least one, but typically two or more Degrees Of Freedom (DOF), and are typically used for transport or placement of a product in an accurate and fast manner. As the DOFs typically include the in-plane translational movement of the motion stage, e.g., X and Y, such motion stages are sometimes also referred to as X-Y stages or translational stages. Motion stages are frequently used in industrial environments, but are not limited to such use.

To be able to position a motion stage with sufficient accuracy, a measurement system may be needed that is able to measure the position of the motion stage with respect to a reference. Ideally, the measurement system has sufficient accuracy and sufficient range in all relevant DOFs. Often, motion stages move in-plane with large displacements in the two translational DOFs X and Y. The position of the motion stage may thus need to be measured in several DOFs, e.g., translational X, Y and Z and rotational Rx, Ry and Rz, e.g., to accurately position the motion stage in those 6 DOFs or to accurately position the motion stage in X and Y while measuring or minimizing the positional variation in the other 4 DOFs.

It may in particular be desirable to be able to measure the position of so-termed 'contactless' motion stages. Such contactless motion stages move without roller bearings, cables (for electrical power or communication) or other types of physical links. For example, instead of bearings, a contactless motion stage may be actuated by inverted planar motors involving stationary coils and moving magnets. Various other actuation means for contactless motion stages exist as well. Contactless motion stages do not suffer from the drawbacks of having physical links to the motion stage, which include but are not limited to:
1. Cables and bearings may introduce disturbance forces which may limit the movement accuracy of the motion stage.
2. In a clean operating environment, cables and bearings may result in undesired particle generation.
3. The construction of a cable carrier may be complex for a motion stage that can perform large translations in-plane in two directions as well as large rotations.
4. Cables and bearings may introduce reliability issues.

It has been conceived to use an interferometry-based measurement system to measure the position of a contactless motion stage for the two translational DOFs X and Y. Such a system may be extended by adding additional mirrors, optics and receivers to measure the remaining 4 DOFs over short ranges. A drawback of such an interferometry-based measurement system is the need for high quality and thus costly optical elements. In addition, such interferometry-based measurement systems may not be able to measure large rZ rotations, which may be required for some motion stage applications.

### SUMMARY OF THE INVENTION

It would be advantageous to obtain a system and method which enables the measurement of a position of a motion stage without the use of interferometry, and thus without at least some of the disadvantages of the use of interferometry. The invention is defined by the independent claims. The dependent claims define advantageous embodiments.

A first aspect of the invention provides a system for measuring a position of a motion stage, the system comprising:
- the motion stage, wherein the motion stage is positionable in an operating area along at least two translational degrees of freedom, wherein the motion stage has a surface on which a two-dimensional visual pattern is provided;
- a plurality of image sensors directed at the operating area of the motion stage and positioned at known relative positions to each other, wherein each of the plurality of image sensors comprises a one-dimensional sensor array; and
- a processing subsystem comprising:
   - a sensor data interface configured to receive sensor data of at least two of the plurality of image sensors that observe the visual pattern, thereby obtaining sensor data representing at least two one-dimensional intersections of the visual pattern;
   - a storage comprising instruction data representing a set of instructions and pattern data indicative of the visual pattern; and
   - a processor configured to communicate with the sensor data interface and the storage and to execute the set of instructions, wherein the set of instructions, when executed by the processor, cause the processor to determine the position of the motion stage by matching the sensor data with the pattern data on the basis of the known relative positions of the at least two image sensors.

In accordance with a further aspect of the invention, a computer-implemented method is provided for measuring a position of a motion stage positionable in an operating area along at least two translational degrees of freedom and having a surface on which a two-dimensional visual pattern is provided, the method comprising:
- obtaining, from a plurality of image sensors which each comprise a one-dimensional sensor array and are i) directed at the operating area of the motion stage and ii) positioned at known relative positions to each other, sensor data of at least two of the plurality of image sensors that observe the visual pattern, thereby obtaining sensor data representing at least two one-dimensional intersections of the visual pattern;
- obtaining pattern data indicative of the visual pattern; and
- determining the position of the motion stage by matching the sensor data with the pattern data on the basis of the known relative positions of the at least two image sensors.

In accordance with a further aspect of the invention, a computer readable medium is provided comprising transitory or non-transitory data representing instructions arranged to cause a processor system to perform the computer-implemented method.

The above measures involve use of image sensors to acquire one-dimensional (1D) image data of a surface of the motion stage when the motion stage is positioned within a field of view of a respective image sensor. In particular, the sensor data of at least two of such image sensors is obtained which each observe different parts of a two-dimensional (2D) visual pattern provided on the surface of the motion stage. Here, the adjective 'visual' refers the pattern being detectable by the image sensors. It is noted that the visual pattern may also, but does not need to, be detectable by the human eye. Each of these image sensors thus obtains sensor data which represents a 1D intersection of the 2D visual pattern. In total, sensor data representing at least two of such 1D intersections is obtained.

The sensor data is then analyzed to determine the position of the motion stage. For that purpose, use is made of the fact that the relative position of the two or more 1D image sensors is known, e.g., from manual pre-configuration, automatic calibration, etc. As such, it is known how the two intersections relate to each other in terms of position. In addition, use is made of pattern data which is indicative of the 2D visual pattern of which the intersections are obtained. For example, the pattern data may contain image data or a vector-based description of the visual pattern. The 1D intersections are then matched to the 2D visual pattern while taking into account the known relative positions of the image sensors. As such, the position of the 2D visual pattern, and thereby the position of the motion stage, can be determined relative to the image sensors. Since the position of the image sensors relative to the operational area or to another object may be known, the measured position may be related to a position in the operational area or one relative to the other object.

The inventors have considered that the position of a motion stage may be measured by cameras instead of by interferometry, as this avoids the need for the high quality and thus costly optical elements of an interferometry-based measurement system. For example, in such a camera-based system, markers may be applied to the motion stage which may then be tracked in 2D images acquired by the image sensors of the cameras, resulting in an estimate of the motion stage's position. To be able to observe the 6 DOF position of the motion stage, multiple cameras may be used, and even more cameras if a relative large operational area is to be covered. However, the use of cameras which acquire 2D images has been considered by the inventors to have various drawbacks for accurate position control. For example, the relatively high data rates and processing load involved in the transfer and analysis of 2D images may necessitate low sampling frequencies, which are not suitable for real-time and accurate position control. Also, for 2D cameras, a trade-off between the field-of-view and accuracy may have to be made, which may be disadvantageous.

The inventors have instead conceived to use multiple 1D image sensors which provide lower data rates and thus allow higher sampling frequencies. Although such 1D image sensors only provide 1D image data, which may in itself be insufficient to uniquely identify a position of the motion stage, the combination of a 2D visual pattern and multiple of such 1D image sensors allows the position of the motion stage nevertheless to be estimated, namely in the earlier indicated manner. By allowing higher sampling frequencies, the system is well-suited for measuring the position of a motion stage for accurate position control. Various simulations indeed confirmed the suitability for accurate position control.

Optionally, each of the plurality of image sensors is a contact image sensor. Contact Image Sensors (CIS), as found in, e.g., paper document scanners, have been found to be well suited due to their relatively high line sampling rates and relatively high optical resolution as well as relatively low cost. Currently, line sampling rates can reach 1-50 kHz and optical resolution of 600 dpi are common, while higher resolutions are also available. Advantageously, in contact image sensors, the pixels may be positioned with high accuracy and have a straight line of sight perpendicular to the array, without requiring optics. This may simplify the calculations by software. Other alternatives of 1D image sensors which are conceived include, but are not limited to, line scan cameras and 2D image sensors of which only one or a limited number of rows and/or columns are read out and processed by the system.

Optionally, the plurality of image sensors are arranged in a one-dimensional or two-dimensional grid above or below the operating area of the motion stage. By arranging the image sensors in a grid, the image sensors may be spread across the operating area so as to cover most if not all of the movement of the motion stage within the operating area. For example, the grid may be regularly spaced along one or both dimensions of the grid. The location of the image sensors, being either above or below the motion stage, may be selected depending on which surface of the motion stage is provided with the 2D visual pattern, e.g., the top-facing or bottom-facing surface.

Optionally, the at least two translational degrees of freedom of the motion stage correspond to an in-plane movement of the motion stage. The system may thus measure the translational X-Y position of the motion stage, which is indicative of the X-Y movement as the X-Y movement may be derived from a difference in X-Y positions.

Optionally, each of the plurality of image sensors is arranged such that an observation direction of each respective image sensor is substantially at a zero angle to the normal of the surface of the motion stage when the motion stage is positioned in the operating area. The image sensors may be arranged to directly face the surface of the motion stage. Here, the term 'observation direction' refers to the main optical axis of the image sensor. This arrangement of the image sensors has been found to enable accurate measurement of X, Y position and Rz rotational position of the motion stage.

Optionally, the plurality of image sensors are arranged such that a first subset of the image sensors has an observation direction which is at a first non-zero angle with the normal of the surface of the motion stage when the motion stage is positioned in the operating area, and a second subset of the image sensors has an observation direction which is at a second non-zero angle with the normal of the surface of the motion stage. An arrangement of the image sensors in which a first subset of image sensors is oriented non-orthogonally to the surface of the motion stage (and thus at a non-zero angle to the normal of the surface) and a second set of image sensors is oriented with a different angle non-orthogonally to the surface allows the system to measure 6 DOFs of the motion stage, e.g., X, Y and Z position and Rx, Ry and Rz rotational position.

For example, to obtain different non-zero angles, each of the first subset of the image sensors may be tilted around a length axis of the respective image sensor by the first non-zero angle with respect to the normal of the surface of the motion stage, and each of the second subset of the image sensors may be tilted around the length axis of the respective image sensor by the second non-zero angle with respect to the normal. As an alternative to the tilting of the image sensors, optics may be used to establish the observation direction at the claimed angle with the normal of the motion stage's surface.

Optionally, the visual pattern is a line pattern. The intersections of a line pattern are well recognizable in the sensor data of 1D image sensors.

Optionally, the line pattern is a nested polygon or a spiral. In a related further aspect of the invention, a motion stage is provided having a surface on which a two-dimensional visual pattern is provided, wherein the visual pattern is a nested polygon or a spiral. Such patterns provide sufficient structure to enable matching the sensor data with the pattern data on the basis of the known relative positions of the image sensors.

In this respect, it is noted that it may be preferred to have a visual pattern and arrangement of image sensors in which the matching always yields a unique solution. However, this is not per se needed, as the 'correct' solution may be identified from multiple possible solutions on the basis of a previous solution, e.g., a previously measured position. Thus, position tracking may be used to reduce the solution space. This has been found to work adequately in view of the inertia of the motion stage (meaning that previous positions are indicative of the current position) as well as the 1D image sensors allowing a relatively high sampling frequency, e.g., above 1 kHz.

Optionally, the nested polygon is rotational asymmetric, or has a discrete rotational symmetry of an order below 12. Although uniqueness in matching may be improved by having a rotational asymmetric nested polygon, it may also suffice to have a relatively low rotational symmetry, e.g., of an order below 12, 8, 6, 4 or 3. As indicated above, position tracking may be used to identify a unique solution despite the rotational symmetry in the visual pattern, or in general, the existence of multiple possible solutions.

Optionally, the set of instructions, when executed by the processor, cause the processor to determine the position of the motion stage by detecting line points in the sensor data and matching the detected line points with the line pattern. For example, the set of instructions, when executed by the processor, may cause the processor to match the detected line points with the line pattern using a quasi-Newton method.

It will be appreciated by those skilled in the art that two or more of the above-mentioned embodiments, implementations, and/or optional aspects of the invention may be combined in any way deemed useful.

Modifications and variations of the motion stage, the computer-implemented method and/or the computer program product, which correspond to the described modifications and variations of the system, can be carried out by a person skilled in the art on the basis of the present description, and vice versa.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a system for measuring a position of a motion stage which comprises a plurality of contact image sensors and a processing subsystem;
Fig. 2 shows a first configuration of the contact image sensors in which the contact image sensors are arranged for measuring 3 DOFs (X, Y, Rz) of the motion stage;
Fig. 3 shows a second configuration in which the contact image sensors are arranged for measuring 6 DOFs (X, Y, Z, Rx, Ry and Rz) of the motion stage;
Figs 4A-4F show a performance simulation of a first embodiment in which the contact image sensors are arranged for 6 DOF measurement, and in which:

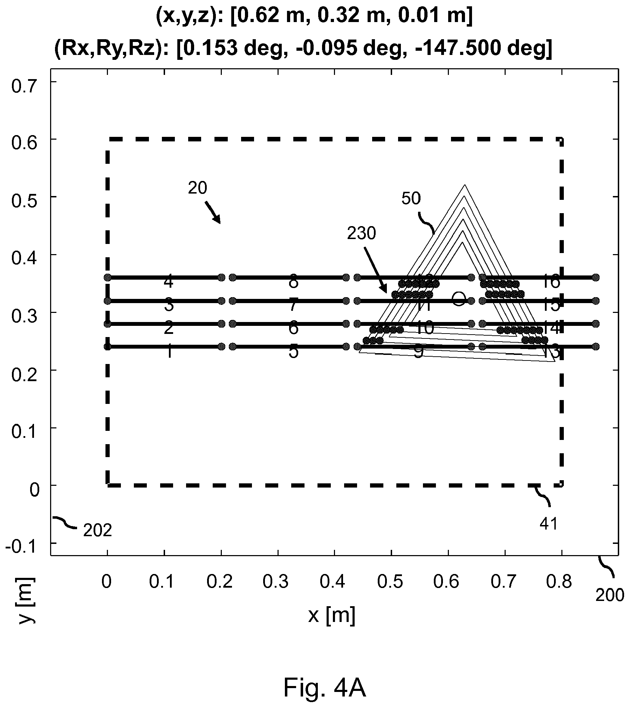

Fig. 4A shows the grid of contact image sensors and the visual pattern,

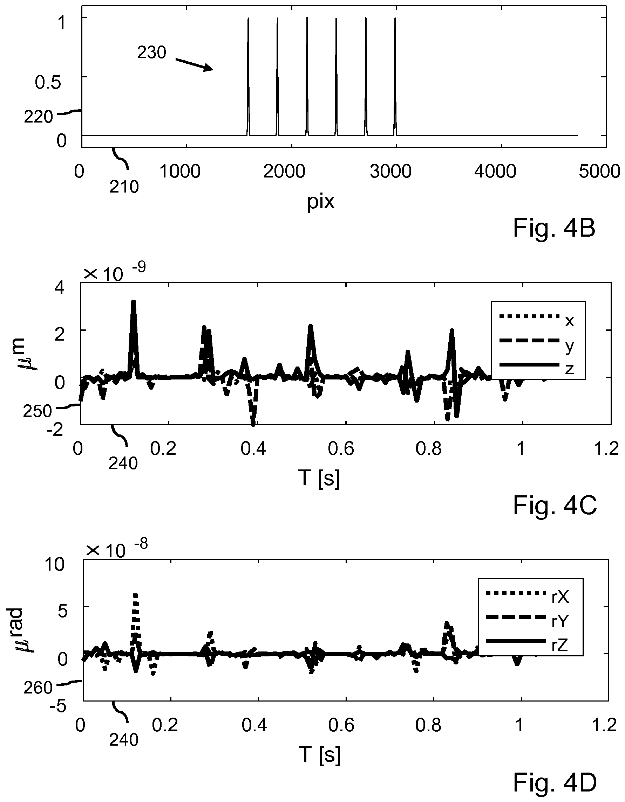

Fig. 4B shows the sensor data of a selected contact image sensor,
Fig. 4C shows a translational measurement error according to the simulation if the motion stage moves according to a predetermined movement,
Fig. 4D shows a rotational measurement error according to the simulation if the motion stage moves according to the predetermined movement,

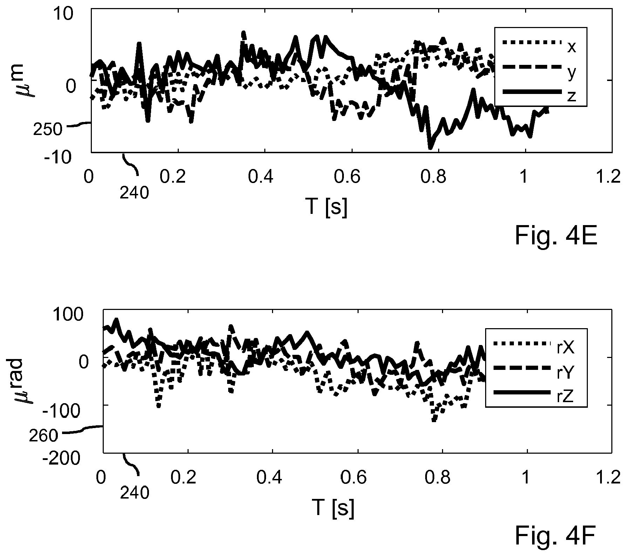

Fig. 4E shows the translational measurement error according to the simulation if disturbances in the geometric parameters and sensor noise are present, and
Fig. 4F shows the rotational measurement error according to the simulation if disturbances in the geometric parameters and sensor noise are present;

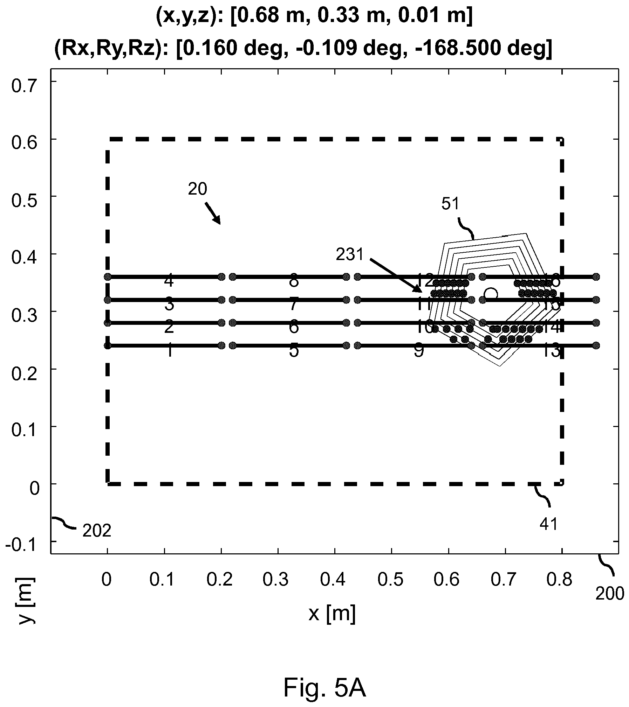

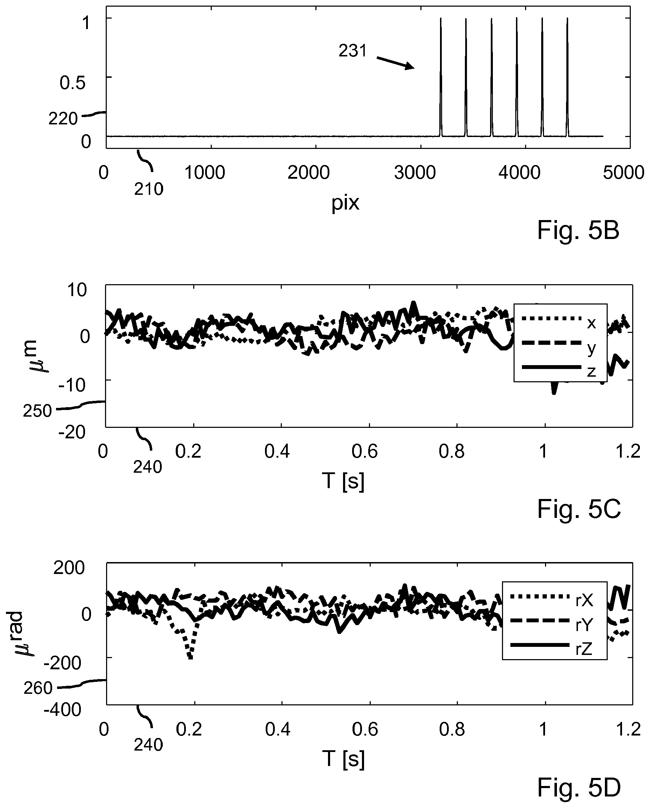

Figs. 5A-5D show the performance simulation of a second embodiment which is similar to that of Figs. 4A-B, E-F with a different visual pattern being used;

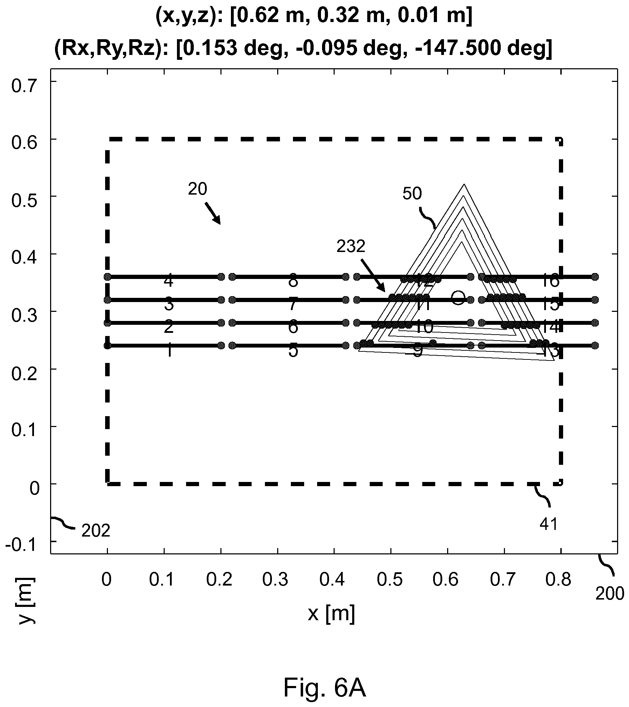

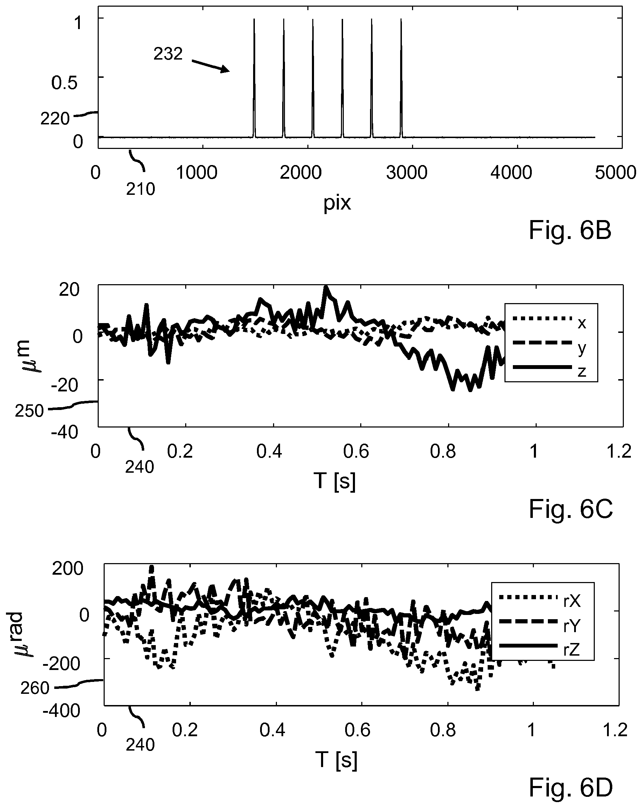

Figs. 6A-6D show the performance simulation of a third embodiment which is similar to that of Figs. 4A-B, E-F with the sensor tilt being reduced from 45 to 20 degrees;

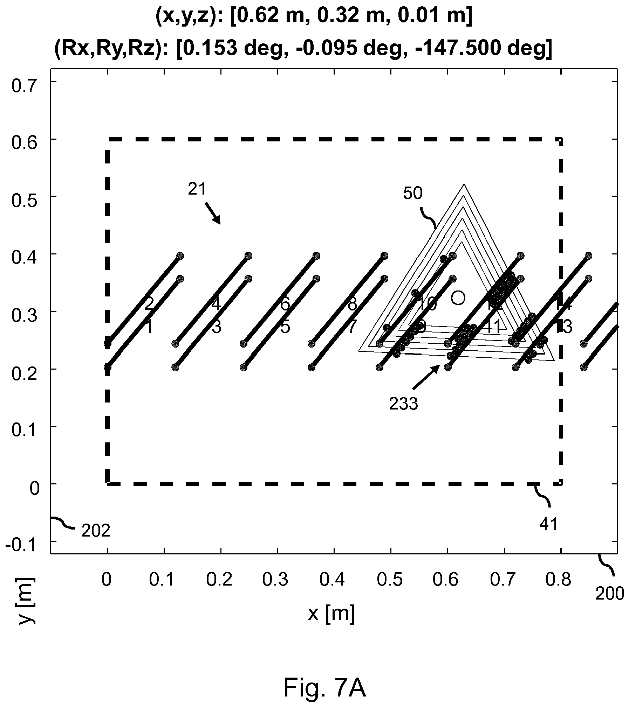

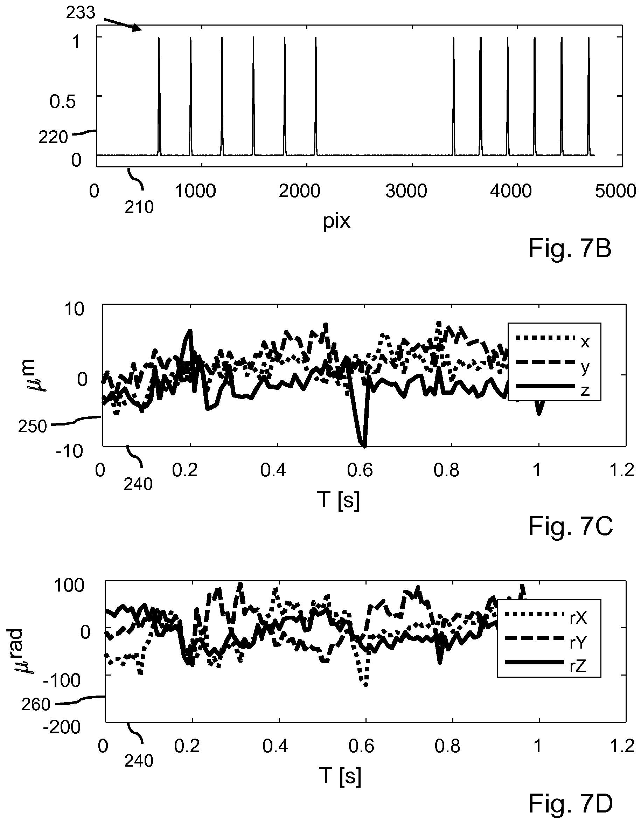

Figs. 7A-7D show the performance simulation of a fourth embodiment which is similar to that of Figs. 4A-B, E-F with the image sensors being arranged in a different grid;

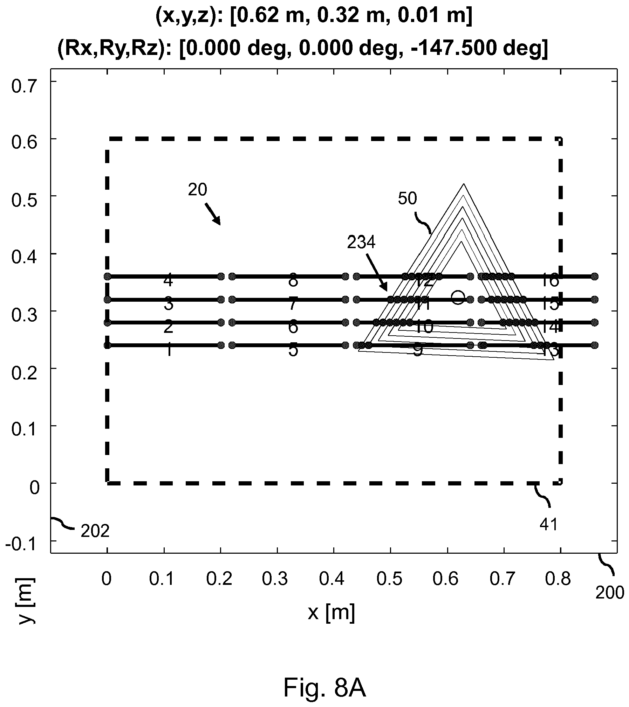

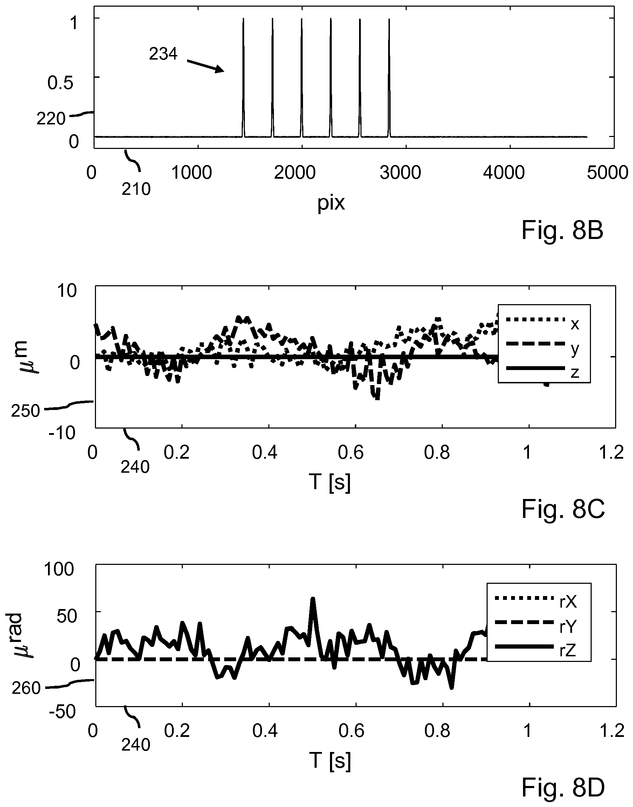

Figs. 8A-8D show the performance simulation of a fifth embodiment in which the contact image sensors are arranged for 3 DOF measurement;

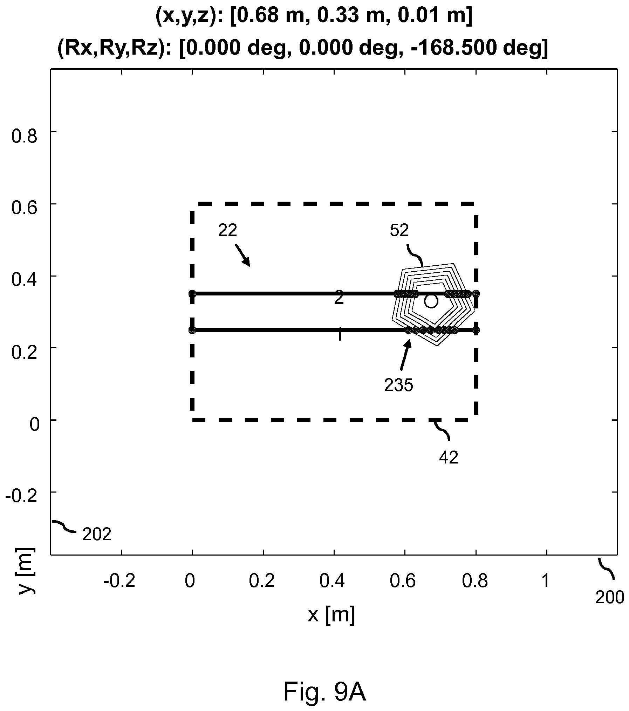

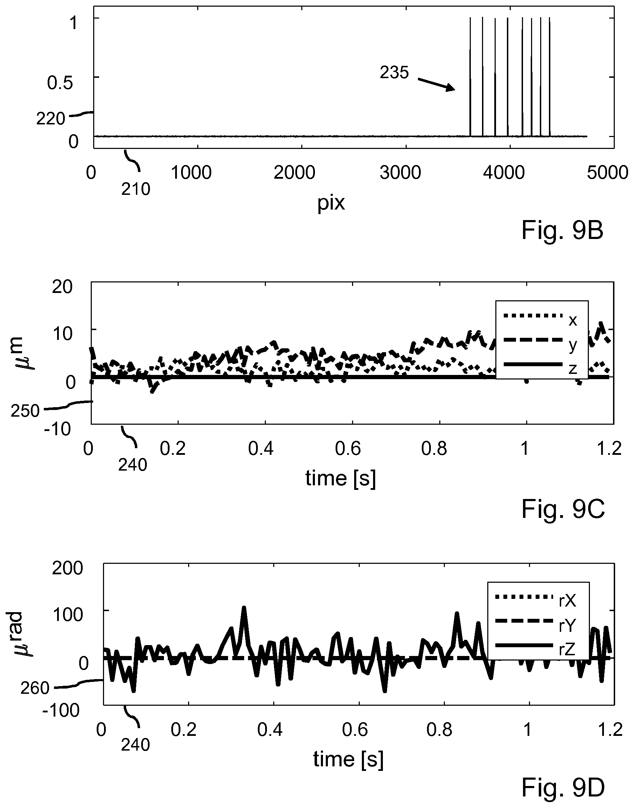

Figs. 9A-9D show the performance simulation of a sixth embodiment in which the contact image sensors are arranged for 3 DOF measurement;

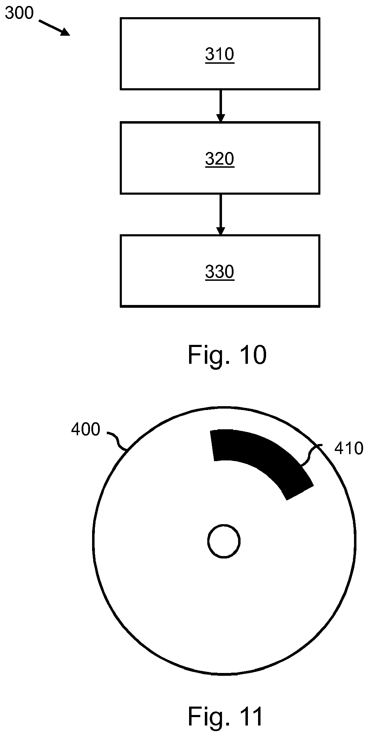

Fig. 10 shows a method for measuring a position of a motion stage; and
Fig. 11 shows a computer readable medium comprising non-transitory data.

It should be noted that the figures are purely diagrammatic and not drawn to scale. In the figures, elements which correspond to elements already described may have the same reference numerals.

### List of reference numbers

The following list of reference numbers is provided for facilitating the interpretation of the drawings and shall not be construed as limiting the claims.
- 1-16: contact image sensor
- 20-22: grid of contact image sensors
- 30,31: sensor data
- 40: motion stage
- 41,42: operating area
- 50-52: visual pattern
- 60: processing subsystem
- 70: sensor data interface
- 80: storage
- 82: instruction data
- 84: pattern data
- 90: processor
- 92, 94: internal data communication
- 100: system for measuring position of motion stage

- 200: X-position
- 202: Y-position
- 210: pixel position
- 220: sensor data value
- 230-235: line points in sensor data
- 240: time
- 250: translational measurement error
- 260: rotational measurement error

- 300: method for measuring position of motion stage
- 310: obtaining sensor data
- 320: obtaining pattern data
- 330: estimating position of motion stage

- 400: computer readable medium
- 410: non-transitory data

### DETAILED DESCRIPTION OF EMBODIMENTS

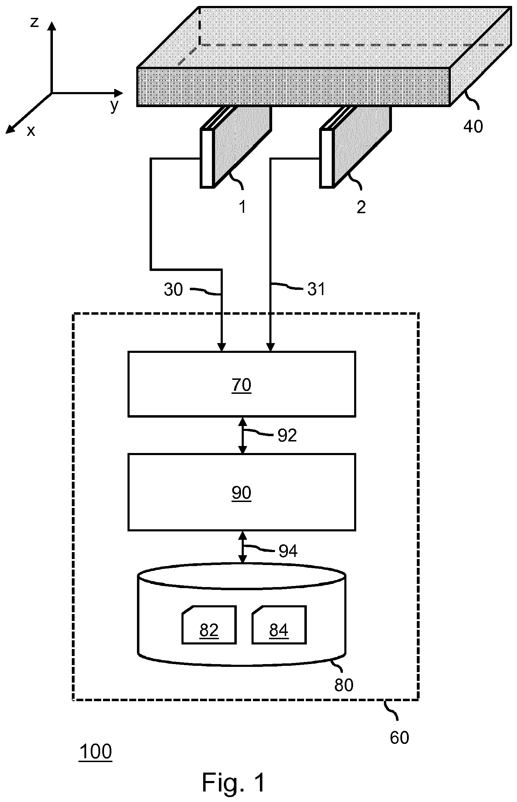

Fig. 1 shows a system 100 for measuring a position of a motion stage 40. The motion stage 40 may be of any known type, including but not limited to a contactless motion stage, e.g., actuated by an inverted planar motor. The motion stage 40 is positionable in an operating area (not explicitly shown in Fig. 1) along at least two translational degrees of freedom, e.g., along the X and Y dimensions corresponding to the in-plane movement of the motion stage 40. The motion stage 40 has a surface on which a 2D visual pattern is provided; this aspect of the invention will be further explained with reference to Figs. 4A-9D. In the example of Fig. 1, the surface is the downward-facing surface of the motion stage 40. Here, 'downward' may refer to a direction of gravity when the motion stage 40 is in operation.

The system 100 further comprises a plurality of image sensors 1, 2 which are directed at the operating area of the motion stage. The image sensors 1, 2 may be positioned such that they are able to observe (parts) of the visual pattern on the surface of the motion stage 40. For that purpose, the image sensors 1, 2 in the example of Fig. 1 are positioned below the motion stage 40 while facing with their observation (sensing) direction upwards. The image sensors 1, 2 each comprise a 1D sensor array providing 1D image data. For example, each of the image sensors 1, 2 may be a Contact Image Sensor (CIS), a line scan camera, or a 2D image sensor of which only one or a small number of rows or columns are read out. In general, each image sensor may be constituted by an elongated sensor array, e.g., being 1D or having an aspect ratio of sensor elements of 1:5, 1:10, 1:20 or even higher.

It is noted that although Fig. 1 only shows two image sensors 1, 2, a larger number of image sensors 1, 2 may be used as well. In general, the number and relative positions of the image sensors 1, 2 may be selected so that at least two of the plurality of image sensors 1, 2 observe the visual pattern at any given time when the motion stage is positioned within the operating area. Accordingly, the acquired sensor data may at any given time provide at least two one-dimensional intersections of the visual pattern.

The system 100 further comprises a processing subsystem 60. The processing subsystem 60 comprises a sensor data interface 70 configured to receive the sensor data 30, 31 of the image sensors 1, 2. The sensor data interface 70 may take various forms, including but not limited to CameraLink interfaces or other serial video interfaces, USB interfaces, FireWire interfaces, Network interfaces, etc. In general, the sensor data interface 70 may be an input interface of a type which matches the type of output interface of the image sensors 1, 2. The processing subsystem 60 further comprises a storage 80 which comprises instruction data 82 representing a set of instructions and pattern data 84 indicative of the 2D visual pattern. The storage 80 may take various forms, including volatile memory such as RAM, non-volatile memory such as Flash as well as other types of storage, e.g., a hard drive or Solid State Disk (SSD) or an array thereof. The storage 80 may also be distributed in that the instruction data 82 may be stored on a different storage subsystem than the pattern data 84.

The processing subsystem 60 further comprises a processor 90 configured to communicate with the sensor data interface 70 and the storage 80 via internal data communication 92, 94 and to execute the set of instructions during operation of the system 100. The set of instructions, when executed by the processor 90, cause the processor 90 to determine the position of the motion stage 40 by matching the sensor data 30, 31 with the pattern data 84 on the basis of the relative positions of the at least two image sensors 1, 2 being known. These relative positions may be obtained by manual pre-configuration or automatic calibration or in any other suitable manner, and may be made known to the processor 90 by being provided as separate data in the storage 80 (not explicitly shown in Fig. 1), or by being part of the instruction data 82, or in any other suitable manner. In this respect, it is noted that the relative positions being 'known' refers to these being made available to the system in the form of data. It will be appreciated that the positions indicated such data may deviate from the actual positions, e.g., due to measurement errors.

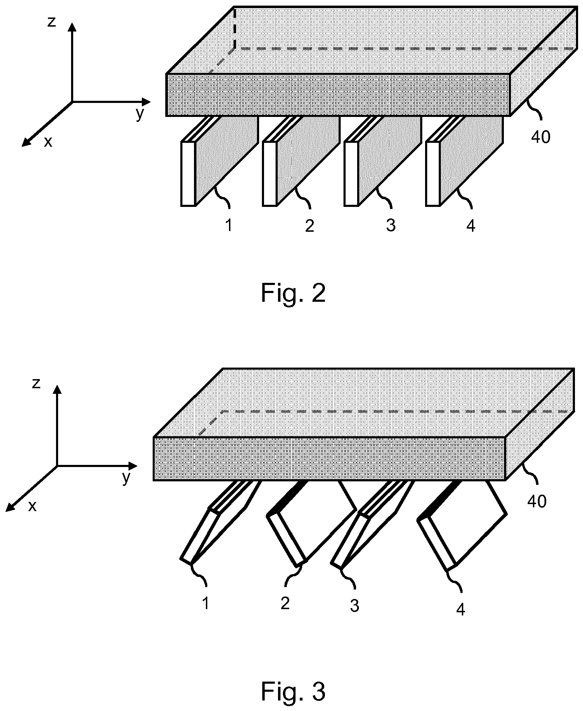

The operation of the system 100, including various optional aspects thereof, will be further explained with reference to Figs. 2-9D.

In general, the processing subsystem 60 of the system 100 may be embodied as, or in, a device or apparatus, such as a workstation or embedded computer. The device or apparatus may comprise one or more (micro)processors which execute appropriate software. The processor 90 of the processing subsystem 60 may be embodied by one or more of these (micro)processors. Software implementing functionality of the processing subsystem 60 may have been downloaded and/or stored in a corresponding memory or memories, e.g., in volatile memory such as RAM or in non-volatile memory such as Flash. Alternatively, the processor 90 may be implemented in the device or apparatus in the form of programmable logic, e.g., as a Field-Programmable Gate Array (FPGA). The sensor data interface 70 may be implemented by a respective interface of the device or apparatus. In general, each unit of the processing subsystem 60 may be implemented in the form of a circuit. It is noted that the processing subsystem 60 may also be implemented in a distributed manner, e.g., involving different devices or apparatuses. For example, the distribution may be in accordance with a client-server model, e.g., using a server and a thin-client workstation.

Figs. 2 and 3 show two different configuration of contact image sensors 1-4. Firstly, in Fig. 2, the contact image sensors 1-4 are arranged for accurately measuring 3 DOFs (X, Y, Rz) of the motion stage 40, whereas in Fig. 3, the contact image sensors 1-4 are arranged for measuring 6 DOFs (X, Y, Z, Rx, Ry and Rz) of the motion stage 40. Namely, to optimize the accuracy of measurement in X, Y and Rz, it has been found that the image sensors 1-4 may be arranged such that an observation direction of each respective image sensor is substantially at a zero angle to the normal of the surface of the motion stage 40 when the motion stage is positioned in the operating area. Effectively, in the example of Fig. 2, this implies that the image sensors 1-4 point upwards, opposite to the direction of gravity.

To optimize the accuracy of measurement in the 6 DOFs (X, Y, Z, Rx, Ry and Rz) of the motion stage 40, the plurality of image sensors 1-4 may be arranged such that a first subset, namely image sensors 1, 3, have an observation direction which is at a first non-zero angle with the normal of the surface of the motion stage 40 when the motion stage is positioned in the operating area, and a second subset, in this example image sensors 2, 4, have an observation direction which is at a second non-zero angle with the normal of the surface of the motion stage 40. For that purpose, each image sensor may be tilted around a length axis of the respective image sensor. For example, if the image sensors 1-4 are arranged in a grid, the image sensors 1-4 may be tilted around the Rx axis with alternating tilting directions for each row, e, g., +30°,-30°,+30°,-30°,... or +45°,-45°,+45°,-45°, ... The number and relative positions of the image sensors 1-4 may be selected such that not only at least two of the image sensors observe the visual pattern, but also that amongst those image sensors, the visual pattern is observed from at least two different angles. In general, the image sensors 1-4 of Figs. 2 and 3 may be arranged in a grid which is spaced apart to cover the operational area with only a limited amount of image sensors, and thus a limited amount of sensor data.

Figs. 4A-9D show the result of performance simulations of different configurations of the system, which include different visual patterns, different number and positions of image sensors, different tilting of image sensors, the presence or lack of disturbances and sensor noise, etc. In each of these examples, the image sensors are contact image sensors, and the motion stage is simulated to move according to a predetermined movement trajectory (not explicitly shown). In addition, the visual pattern is by way of example a line pattern, being a nested polygon. The algorithm used for calculating the position from the sensor data and the pattern data will be described further onwards, but is in these examples based on the detection of line points (peaks) in the sensor data.

Figs. 4A-4F relate to a performance simulation of a first embodiment in which, as illustrated in Fig. 4A, the contact image sensors 1-16 are arranged in a grid 20 of 4x4 contact image sensors which are arranged to cover an operational area 41 of the motion stage. Here, the X-axis 200 corresponds to an X-position and the Y-axis 202 corresponds to a Y-position in the operational area 41. Further shown is the visual pattern 50 provided on the motion stage; the motion stage itself is not shown to avoid impairing the legibility of the figures. Fig. 4A further shows, above the figure, the current position of the center of the motion stage in the 6 DOFs. Finally, the intersection points of the visual pattern with each respective image sensor's observation area are shown in Fig. 4A as dots 230. As the intersection points are intersection with a line of the line pattern 50, they are also referred to as line points, and may be detected by detecting peaks in the sensor data. The position of the dots 230 reflect the respective tilting of the contact image sensors 1-16 by +45° or -45°.

Fig. 4B shows an exemplary output of one of the contact image sensors, being in this example contact image sensor 11. Here, the horizontal axis 210 shows the pixel position, whereas the vertical axis 220 shows the sensor data value. The peaks corresponding to the line points 230 may be detected by signal analysis, as described further onwards.

Ideally, there are no disturbances in the values of geometric parameters known to the system and there is no sensor noise. Such geometric parameters which may be known to the system and used in determining the position of the motion stage include, but are not limited to, position of a sensor, orientation of a sensor, pitch of sensor pixels, position errors of (sets of) pixels, line-of-sight angle error of (sets of) pixels, errors in the visual pattern, etc.

Fig. 4C show the measurement accuracy which may be obtained in X, Y and Z and Fig. 4D shows the measurement accuracy in Rx, Ry and Rz when the motion stage moves according to a predetermined movement trajectory over time (T in seconds, horizontal axis 240) without such disturbances and sensor noise. Here, the accuracy is calculated as a difference between the actual (simulated) position of the motion stage and the measured position, resulting in the case of Fig. 4C in a translational measurement error 250 (expressed in µm) and in the case of Fig. 4D in a rotational measurement error 260 (expressed in µrad). Any estimation errors are typically small and due to a limited computational accuracy.

Figs. 4E and 4F are similar to Figs. 4C and 4D, respectively, except that the presence of disturbances in the geometric parameters has been simulated by adding/subtracting 10 µm for various geometric parameters, such as the 'known' sensor positions and the gridline positions as indicated by the pattern data, and adding 0.1% (addititive) sensor noise. It can be seen that compared to Figs. 4C and 4D, the measurement accuracy decreases but may still be considered acceptable for various use-cases.

The following simulations are performed having the same disturbances and sensor noise applied to the sensor data as described with reference to Figs. 4E and 4F.

Figs. 5A-5D show the performance simulation of a second embodiment which is similar to that of Figs. 4A-B, E-F. However, instead of a nested triangle, a nested pentagon 51 is used as visual pattern, resulting in a different set of detected line points 231. It can be seen that the measurement accuracy is roughly similar to that of Figs. 4A-B, E-F.

Figs. 6A-6D show the performance simulation of a third embodiment which is similar to that of Figs. 4A-B, E-F, however, with the sensor tilt being now reduced from 45 to 20 degrees. It can be seen by comparing Fig. 6C with Fig. 4E and Fig. 6D with Fig. 4F that such reduced tilting improves the accuracy of the in-plane position measurement, e.g., in X, Y and Rz, but reduces the accuracy of the out-of-plane measurement, e.g., in Rx, Ry and Z.

Figs. 7A-7D show the performance simulation of a fourth embodiment which is similar to that of 4A-B, E-F, however, with the image sensors 1-16 now being arranged in a different grid 21 of image sensors, e.g., having a 2x8 size instead of 4x4, while also being rotated within the X-Y plane, thereby resulting in a different set of detected line points 233. Again, the measurement accuracy may be considered acceptable for various use-cases.

Figs. 8A-8D show the performance simulation of a fifth embodiment in which the contact image sensors 1-16 are arranged for 3 DOF measurement and thus not tilted, which also follows from the detected line points 234 being shown as directly underlying the contact image sensors in Fig. 8A. Compared to Figs. 4A-B, E-F, which show the measurement optimized for 6 DOF, the measurement optimized for 3 DOF yields a (slightly) improved accuracy for the in-plane position measurement, e.g., in X, Y and Rz.

Figs. 9A-9D show the performance simulation of a sixth embodiment in which only two contact image sensors 1-2 are used in a 2x1 grid 22 to cover a smaller operational area 42 and with a smaller visual pattern 52 provided on the motion stage. Fig. 9B shows the sensor data of the contact image sensor 1, indicating the line points 235.

The above performance simulations indicate the feasibility of the position measurement system and method as described in this specification.

To determine the position of the motion stage based on the sensor data, the pattern data and the known relative positions of the image sensors, an algorithm may be used. The algorithm may be represented by the instruction data of the processor.

For example, the algorithm may broadly involve, for a line pattern:
1. Analyzing the sensor data of each image sensor to detect line points (peaks) in the sensor data. Such detection may be performed with subpixel accuracy.
2. Defining a cost-function, e.g., for each detected line point:
   - Computing the 3D projected line point P projected onto the motion stage containing the known line pattern.
   - Computing the nearest distance D from the projected line point P to the nearest line of the known line pattern.
   - Computing the gradient dP/dX from the motion stage position X to the projected line point P.
   - Computing the gradient dJ/dP from the projected line point to the cost-function output J.
   Here, the cost-function output J may be the average D*D/2 over all pixels, and the cost-function gradient dJ/dX may be the average of dJ/dP * dP/dX over all pixels.
3. Optimization:
   - A quasi-newton least squares optimization algorithm may be used to minimize the cost-function output J while optimizing the motion stage position X.
   - The gradient dJ/dX may be used to speed up convergence because less cost-function are needed, e.g., the gradient does not have to be computed numerically using parameter perturbations.

In a specific example, the algorithm may be the embodied by the following Matlab code. Here, for each new measurement, a function 'obtain_position' may be called to estimate the 3 DOF/6 DOF position. From the sensor data, peaks may be detected corresponding to observed lines of the line pattern. By means of optimization of the 'cost_function', the detected line points may be mapped onto the line pattern of the motion stage as well as possible by optimizing the 3 DOF/6 DOF position of the motion stage.

```
function d = obtain_position (d)
 %start timer
 tic
 %preparations
 d = capture_observed_linepoints(d); %using raw measurement
 d = prepare_for_optimization(d); %initial conditions, disturbances
 %optimize position
 if d.est.algorithm==1 %fminsearch
     qest =
     fminsearch(@(q)cost_function(q,d),d.est.q0,d.est.fminsearch_options);
     elseif d.est.algorithm<=3 %fminunc (without/with gradient)
     qest =
     fminunc(@(q)cost_function(q,d),d.est.q0,d.est.fminunc_options);
     else %quasi-newton least squares including gradient
     qest = qnls(@(q)cost_function(q,d),d.est.q0,d.est.qnls_options);
     end
     %save results
     if ∼d.mov.flag6DOF %3 DOF case
     qest = [qest([1 2]) d.mov.pos(end,3) 0 0 qest(3)];
     end
     d.mov.posest(size(d.mov.pos,1),:) = qest(:)';
     %timing
     d.sim.calctime(d.sim.step) = toc*1e3;
     function [J,dJ] = cost_function(q,d)
     %mover position (x, y, z, Rx, Ry, Rz)
     if d.mov.flag6DOF
     pose = q;
     else
     pose = [q(1) q(2) d.mov.pos(end,3) 0 0 q(3)];
     end
     %project sensors onto mover
 [linepoint_pos_at_mover, sensor_pos_and_dir] =
 sensor_projection_calculations(d,pose);
 % compute cost function
 if d.est.method==1 %analytic projection
     %project linepoints onto mover grid
     [minimum_distance_squared, gridline_reference] =
     linepoints_projection_at_mover(d,linepoint_pos_at_mover);
     if d.est.algorithm>=3 %gradient function needed
          %compute gradients
          dJdp = grad_dJdp(linepoint_pos_at_mover, gridline_reference);
          %gradient: local linepoint position -> cost-function
          dp = grad_dp(sensor_pos_and_dir, pose); %gradient: pose ->
          local linepoint position
          dJi =
 (bsxfun(@times,dp(:,1:2:12),dJdp(:,1))+bsxfun(@times,dp(:,2:2:12),dJd
 p(:,2))).'; %gradient: pose -> cost function for each detected
 linepoint
          %remove n worst linepoints (possibly outliers)
           [∼,ind] = sort(minimum_distance_squared,'descend');
          dJi(:,ind(1:d.est.noutliers)) = nan;
          minimum_distance_squared(ind(1:d.est.noutliers)) = nan;
          %compute gradient: pose -> cost-function
          if d.mov.flag6DOF
               dJ = mean(dJi,2,'omitnan').*[1;1;1;pi/180*ones(3,1)];
          else
               dJ = mean(dJi([1 2 6],:),2,'omitnan').*[1;1;pi/180];
          end
     else %no gradient needed
          dJ = [];
     end
     %cost-function
     J = mean(.5*minimum_distance_squared, 'omitnan');
     else %gridmap based cost-function
     J =
     mean(d.est.fcn(linepoint-pos-at-mover(:,1),linepoint_pos_at_mover(:,2
     )));
     end
```

In general, for 6 DOF (X, Y, Z, Rx, Ry, Rz) position measurement, the image sensors may be distributed such that at any time at least 6 line points may be detected and each DOF shows a unique gradient with respect to other DOFs, e.g., the Jacobian matrix is not singular at that point. Accuracy may decrease if multiple gradient start to look similar. In general, the accuracy of the measurement increases with the amount of detected line points, as by using more detected line points, (pseudo-)random effects like noise, tolerances, etc. may be averaged and thereby their influence on the position measurement may be reduced.

The grid of image sensors and the visual pattern may be selected to obtain a trade-off in accuracies across the DOFs. For example, by tilting the image sensors further away from the normal of the surface of the motion stage, the measurement of the position of the motion stage may be more accurate in Z-direction and less accurate in X,Y-direction.

It is noted that the optimal distribution of the image sensors may be closely related to the used visual pattern and may be determined theoretically or empirically, either jointly or for a particular visual pattern. It will be appreciated that also a sub-optimal distribution of the image sensors may provide sufficient accuracy for some use-cases.

It is within reach of the skilled person to suitably select the distribution of image sensors and the visual pattern to reduce or prevent the occurrence of singular points when determining the position of the motion stage. For example, when the visual pattern only consists of lines in the X-direction, and the motion stage moves in the X-direction, the X-position cannot be determined as it represents a singular point. This may be avoided by ensuring that the visual pattern contains detail in the X-direction and thereby is translationally unique, or at least represents only a limited number of singular points.

In general, the visual pattern may be designed to contain horizontal and vertical detail. The visual pattern may also be designed to be rotation asymmetric, rather than a rotation symmetric pattern such as a circle. For example, in case the visual pattern is a nested polygon, such as a nested triangle, one side of the triangle may have thicker or more lines. Yet another example is a spiral. The visual pattern may also be a random pattern. In general, it may be tried to ensure that the lines of a line pattern are sufficiently isolated from each other to enable their intersection to be reliably detected from the sensor data.

In case the visual pattern is a line pattern, black lines on a white background may be used to improve contrast. When using RGB image sensors, a combination of 3 different grids in the colors red, green, and blue may be used. This may provide more detected line points which may be used to improve the measurement accuracy.

It is noted that the visual pattern does not need to be a line pattern, but may also be another pattern, such as an image. In this case, instead of matching detected line points to a line pattern, a detected intensity profile may be matched to the image.

In some embodiments, the system may further comprise one or more light sources to illuminate the visual pattern on the surface of the motion stage. For example, light strips may be integrated with CIS scanners or provided separately.

In some embodiments in which the motion stage is a contact-less motion stage using an inverted planar motor, the coils may be placed beside the image sensors while the magnets may be placed in the bottom of the motion stage.

It will be appreciated that the accuracy of the measurement may depend on the resolution of the image sensors. The inventors have considered, as a very rough rule, that the spacing between the sensor elements may be roughly 1 order higher than the overall accuracy. As such, if a measurement accuracy of 1-10 µm is desired, the image sensor resolution may be 10-100 µm, which corresponds to approximately 300-2400 dpi.

In general, more than 6 DOFs of movement may be measured, such as deformations of the motion stage. Such deformations may be induced by temperature variations, e.g., thermal expansion, or by internal flexibilities in the motion stage.

In some embodiments, a sampling rate in the order of 1 kHz and an accuracy in the order of 1-10 µm may be used. If an actuator is added to the system, such as an inverted planar motor, the loop may be closed in that the measured position may be used to control the actuation of the motion stage. In some embodiments, the measurement system may be used for actuator commutation as it may provide an absolute position, e.g., relative to a known absolute reference such as the absolute position of the image sensors.

Fig. 10 shows a computer-implemented method 300 for measuring a position of a motion stage positionable in an operating area along at least two translational degrees of freedom and having a surface on which a two-dimensional visual pattern is provided.

It is noted that the method 300 may, but does not need to, correspond to an operation of the system 100 as described with reference to Fig. 1 and others.

The method 300 comprises, in an operation titled "OBTAINING SENSOR DATA", obtaining 310 from a plurality of image sensors which each comprise a one-dimensional sensor array and are i) directed at the operating area of the motion stage and ii) positioned at known relative positions to each other, sensor data of at least two of the plurality of image sensors that observe the visual pattern, thereby obtaining sensor data representing at least two one-dimensional intersections of the visual pattern. The method 300 further comprises, in an operation titled "OBTAINING PATTERN DATA", obtaining 320 pattern data indicative of the visual pattern. The method 300 further comprises, in an operation titled "ESTIMATING POSITION OF MOTION STAGE", determining 330 the position of the motion stage by matching the sensor data with the pattern data on the basis of the known relative positions of the at least two image sensors.

It will be appreciated that the operations of Fig. 10 may be performed in any suitable order, e.g., consecutively, simultaneously, or a combination thereof, subject to, where applicable, a particular order being necessitated, e.g., by input/output relations. For example, the steps 310, 320 may be performed simultaneously or in reverse order.

The method may be implemented on a computer as a computer implemented method, as dedicated hardware, or as a combination of both. As also illustrated in Fig. 11, instructions for the computer, e.g., executable code, may be stored on a computer readable medium 400, e.g., in the form of a series 410 of machine readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 11 shows an optical disc 400.

Examples, embodiments or optional features, whether indicated as nonlimiting or not, are not to be understood as limiting the invention as claimed.

It will be appreciated that the invention also applies to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (100) for measuring a position of a motion stage, the system comprising:
- the motion stage (40), wherein the motion stage is positionable in an operating area (41, 42) along at least two translational degrees of freedom, wherein the motion stage has a surface on which a two-dimensional visual pattern (50-52) is provided;
- a plurality of image sensors (1-16) directed at the operating area of the motion stage and positioned at known relative positions to each other, wherein each of the plurality of image sensors comprises a one-dimensional sensor array; and
- a processing subsystem (60) comprising:
- a sensor data interface (70) configured to receive sensor data of at least two of the plurality of image sensors that observe the visual pattern, thereby obtaining sensor data representing at least two one-dimensional intersections of the visual pattern;
- a storage (80) comprising instruction data (82) representing a set of instructions and pattern data (84) indicative of the visual pattern; and
- a processor (90) configured to communicate with the sensor data interface and the storage and to execute the set of instructions, wherein the set of instructions, when executed by the processor, cause the processor to determine the position of the motion stage by matching the sensor data with the pattern data on the basis of the known relative positions of the at least two image sensors.

2. The system (100) according to claim 1, wherein each of the plurality of image sensors (1-16) is a contact image sensor.

3. The system (100) according to claim 1 or 2, wherein the plurality of image sensors (1-16) are arranged in a one-dimensional or two-dimensional grid (20-22) above or below the operating area (41, 42) of the motion stage.

4. The system (100) according to any one of the above claims, wherein the at least two translational degrees of freedom of the motion stage (40) correspond to an in-plane movement of the motion stage.

5. The system (100) according to any one of the above claims, wherein each of the plurality of image sensors (1-4) is arranged such that an observation direction of each respective image sensor is substantially at a zero angle to the normal of the surface of the motion stage (40) when the motion stage is positioned in the operating area (41, 42).

6. The system (100) according to any one of claims 1 to 4, wherein the plurality of image sensors (1-4) are arranged such that a first subset (1, 3) of the image sensors has an observation direction which is at a first non-zero angle with the normal of the surface of the motion stage (40) when the motion stage is positioned in the operating area (41, 42), and a second subset (2, 4) of the image sensors has an observation direction which is at a second non-zero angle with the normal of the surface of the motion stage.

7. The system (100) according to claim 6, wherein each of the first subset (1, 3) of the image sensors is tilted around a length axis of the respective image sensor by the first non-zero angle with respect to the normal of the surface of the motion stage (40), and each of the second subset (2, 4) of the image sensors is tilted around the length axis of the respective image sensor by the second non-zero angle with respect to the normal.

8. The system (100) according to any one of the above claims, wherein the visual pattern (50-52) is a line pattern.

9. The system (100) according to claim 8, wherein the line pattern (50-52) is a nested polygon or a spiral.

10. The system (100) according to claim 9, wherein the nested polygon (50-52) is rotational asymmetric, or has a discrete rotational symmetry of an order below 12.

11. The system (100) according to any one of claim 8 to 10, wherein the set of instructions, when executed by the processor, cause the processor (90) to determine the position of the motion stage (40) by detecting line points (230-235) in the sensor data and matching the detected line points with the line pattern (50-52).

12. The system (100) according to claim 11, wherein the set of instructions, when executed by the processor, cause the processor (90) to match the detected line points (230-235) with the line pattern (50-52) using a quasi-Newton method.

13. A motion stage (40) having a surface on which a two-dimensional visual pattern (50-52) is provided, wherein the visual pattern is a nested polygon or a spiral.

14. A method (300) for measuring a position of a motion stage positionable in an operating area along at least two translational degrees of freedom and having a surface on which a two-dimensional visual pattern is provided, the method comprising:
- obtaining (310), from a plurality of image sensors which each comprise a one-dimensional sensor array and are i) directed at the operating area of the motion stage and ii) positioned at known relative positions to each other, sensor data of at least two of the plurality of image sensors that observe the visual pattern, thereby obtaining sensor data representing at least two one-dimensional intersections of the visual pattern;
- obtaining (320) pattern data indicative of the visual pattern; and
- determining (330) the position of the motion stage by matching the sensor data with the pattern data on the basis of the known relative positions of the at least two image sensors.

15. A computer readable medium (400) comprising transitory or non-transitory data (410) representing instructions arranged to cause a processor system to perform the method according to claim 14.
